# EUROPEAN PATENT SPECIFICATION

(11) **EP 2 469 207 B1**
(45) Date of publication and mention of the grant of the patent: **20.06.2018**
(21) Application number: 10196375.9
(22) Date of filing: 22.12.2010
(51) Int. Cl.: F27D 17/00, C25C 3/22

(54) **Metallurgical plant gas cleaning system, and method of cleaning an effluent gas**
Metallurgisches Anlagengasreinigungssystem und Verfahren zum Reinigen eines abgeführten Gases
Système de nettoyage de gaz d'usine métallurgique et procédé de nettoyage d'un gaz effluent

(43) Date of publication of application: 27.06.2012
(73) Proprietor: General Electric Technology GmbH, 5400 Baden (CH)
(72) Inventor: Wedde, Geir, 1262, Oslo (NO); Sorhuus, Anders, 1406, Ski (NO)
(74) Representative: General Electric Technology GmbH

(56) References cited:
- WO-A1-2008/113496
- CN-U- 201 574 161
- JP-A- 62 185 810

## Description

### Field of the Invention

The present invention relates to a metallurgical plant gas cleaning system comprising at least one gas cleaning unit, and a gas flow generating device for generating a flow of effluent gas through the gas cleaning unit for effluent gas cleaning.

The present invention also relates to a method of cleaning effluent gas of a metallurgical plant using a cleaning system comprising at least one gas cleaning unit and a gas flow generating device.

### Background of the Invention

Aluminium is often produced by means of an electrolytic process using one or more aluminium production electrolytic cells. One such process is disclosed in US 2009/0159434. Such electrolytic cells typically comprise a bath for containing bath contents comprising fluoride containing minerals on top of molten aluminium. The bath contents are in contact with cathode electrode blocks and anode electrode blocks. Aluminium oxide is supplied on regular intervals to the bath via openings at several positions along the center of the cell and between rows of anodes.

Aluminium so produced generates effluent gases, including hydrogen fluoride, sulphur dioxide, carbon dioxide and the like. These gases must be removed from the aluminium production electrolytic cells and disposed of in an environmentally conscientious manner. Furthermore, the heat generated by such an electrolysis process must be controlled in some manner to avoid problems with the equipment located near the bath overheating. As described in US 2009/0159434, one or more gas ducts may be used to draw effluent gas and dust particles away from a number of parallel electrolytic cells and to remove generated heat from the cells in order to cool the cell equipment. To accomplish the same, suction or a negative pressure is generated in the gas ducts by means of a fan or similar device. This suction causes a flow of ambient ventilation air through the electrolytic cells and into the adjacent gas ducts. The flow of ambient ventilation air through the electrolytic cells cools the electrolytic cell equipment as it draws generated effluent gas and dust particles therefrom. The suction generated by the fan likewise creates a suitable gas flow through the electrolytic cells and the gas ducts to draw the generated effluent gas and dust particles through the fluidly connected gas cleaning system.

The gas cleaning system should preferably offer high reliability, or alternatively, back-up systems should be provided within the plant since stopping and re-starting the electrolytic production process due to cleaning system failure may be expensive.

In many cases the effluent gas to be cleaned is hot, and cooling the gas before it enters the gas cleaning system may be advantageous with respect to the gas cleaning system process and/or the desire for energy recovery. DE 198 45 258 discloses an aluminium production plant in which a heat exchanger is arranged upstream of a gas cleaning system for purposes of energy recovery.
DE 10 2007 025 978 discloses a cleaning system and a method in accordance with the precharacterizing part of claims 1 and 9.

### Summary of the Invention

An object of the present invention is to provide a metallurgical plant gas cleaning system that is more efficient with respect to cleaning equipment operating costs than the system of the prior art.

The above-noted object is achieved by a metallurgical plant gas cleaning system according to independent claim 1. Energy recovered through the cooling of effluent gas from one or more electrolytic cells may thus be recovered in an efficient manner and used as an internal energy source to fully or at least partly power a gas flow generating device, such as a fan, to generate a flow of effluent gas to be cleaned through the gas cleaning system. Hence, the amount of external energy required to generate the flow of effluent gas through the gas cleaning system may be reduced. A further advantage is that the need for control equipment to control the gas flow generating device may be reduced. Such reductions in external energy consumption and control equipment needs reduce the required capital investment and ongoing operating costs of the overall gas cleaning system. Power generated using the heated fluid generated by the heat exchanger may for example be in the form of mechanical work, directly driving a fan via a mechanical shaft, or in the form of electrical energy useful to drive a fan motor. A further advantage of the subject gas cleaning system is that when the need for energy to drive the gas flow generating device is high, due to the production of an increased amount of effluent gas by the metallurgical process, the amount of heat available for energy recovery and heated fluid generation is also high. Hence, the gas cleaning system will be at least partly self-regulating, with increases in heated fluid generation by the heat exchanger coinciding with increases in energy demands to generate a flow of the effluent gas.

According to one embodiment of the subject system, said heat exchanger for cooling said effluent gas is arranged upstream with respect to the flow of effluent gas of said at least one gas cleaning unit. An advantage of this embodiment is that the gas cleaning process tends to be more efficient at lower gas temperatures.

Preferably, said heated fluid-propelled drive unit is a rotary engine that is powered by the heated fluid flow to achieve mechanical work. Hence, the gas flow generating device may be powered in a very efficient manner. By connecting a rotatable shaft of such a rotary engine directly to the gas flow generating device, heat energy from effluent gas may be recovered in a very efficient manner.

In one embodiment, said heated fluid-propelled drive unit comprises a rotatable shaft to which a turbine wheel for receiving said heated fluid is connected.

In another embodiment, said heated fluid-propelled drive unit comprises a rotatable shaft to which a screw expander for receiving said heated fluid is connected in order to simplify the system and to reduce the required number of system components, such as for example, by eliminating a gear box and/or by eliminating high revolutions per minute (rpm) bearings.

A further object of the present invention is to provide a method of cleaning effluent gas from a metallurgical plant that is more efficient with respect to cleaning equipment capital and operating costs than is the method of the prior art.

This object is achieved by a method of cleaning effluent gas from a metallurgical plant according to independent claim 9. An advantage of the above-described method is that heat energy recovered from effluent gas during the cooling thereof may be used to power a gas flow generating device in a gas cleaning system of the plant in a very efficient manner. Furthermore, control requirements for the gas flow generating device may be reduced.

In accordance with a further aspect of the present invention there is provided a metallurgical plant comprising at least one gas cleaning unit, and a gas flow generating device for generating a flow of effluent gas to be cleaned through the gas cleaning unit. The metallurgical plant further comprises a heat exchanger for cooling said effluent gas and for generating, directly or indirectly, a heated fluid, and a heated fluid-propelled drive unit for receiving the heated fluid generated by means of said heat exchanger and for powering a compressor generating a flow of compressed air for use as a utility in the metallurgical plant.

An advantage of this metallurgical plant is that at least a portion of the consumption of compressed air, which is utilized as a utility in many places in the gas cleaning unit and in the aluminium production electrolytic cell, is generated utilizing process internally available heat energy which is transferred into a useful flow of compressed air by means of the compressor driven by the heated fluid generated in the cooling of the effluent gas.

In accordance with one embodiment, at least a portion of the flow of compressed air generated by the compressor is utilized for powering the gas flow generating device.

In accordance with a yet further aspect of the present invention there is provided a method of cleaning effluent gas in a metallurgical plant. The method comprises cooling the effluent gas in a heat exchanger while generating, directly or indirectly, a heated fluid utilizing heat extracted from the effluent gas in said heat exchanger to drive a compressor to create a flow of compressed air for use as a utility in the metallurgical plant.

Further objects and features of the present invention will be apparent from the following detailed description and claims.

### Brief description of the Drawings

The subject invention is described in more detail below with reference to the appended drawings in which:
Fig. 1 is a schematic side view of an aluminium production plant provided with a gas cleaning system according to a first embodiment;
Fig. 2 is a schematic side view of an aluminium production plant provided with a gas cleaning system according to a second embodiment;
Fig. 3 is a schematic side view of an aluminium production plant provided with a gas cleaning system according to a third embodiment; and
Fig. 4 is a schematic side view of an aluminium production plant provided with a gas cleaning system according to a fourth embodiment.

### Detailed Description of Preferred Embodiments

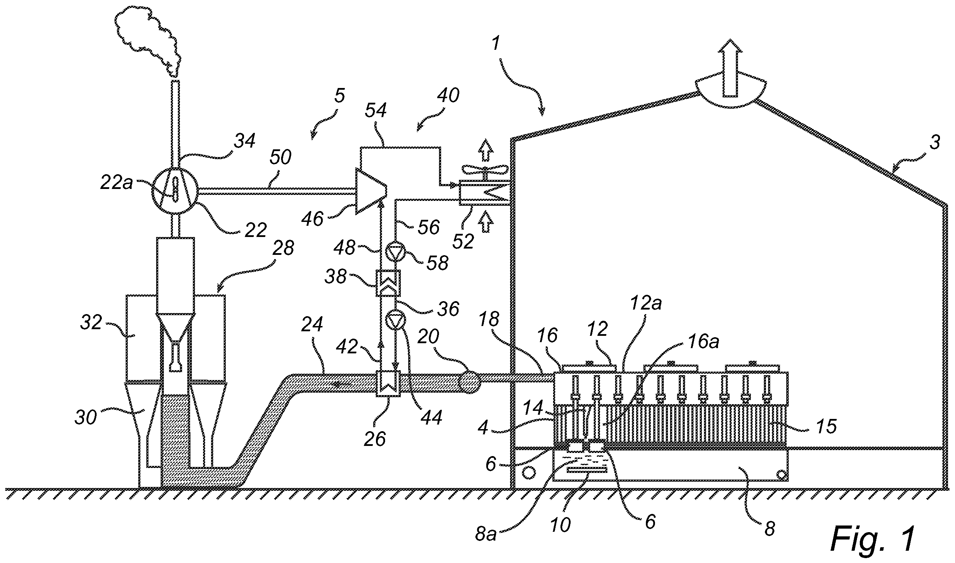

Fig. 1 is a schematic side view representation of an aluminium production plant 1. The aluminium production plant 1 comprises an aluminium production electrolytic cell room 3 and a gas cleaning system 5. In the electrolytic cell room 3 a number of aluminium production smelting pots, also called aluminium production electrolytic cells, 4 may be arranged. The electrolytic cells 4 are arranged in potlines in a manner well known to those skilled in the art. In Fig. 1, only one aluminium production electrolytic cell 4 is depicted for purposes of clarity and simplicity, but it will be appreciated that electrolytic cell room 3 may typically comprise 50 to 200 electrolytic cells.

The aluminium production electrolytic cell 4 comprises a number of anode electrodes 6, typically six to thirty anode electrodes, typically arranged in two parallel rows extending along the length of cell 4 and extending into contents 8a of bath 8. One or more cathode electrodes 10 are also located within bath 8. The process occurring in the electrolytic cell 4 may be the well-known Hall-Héroult process in which aluminium oxide is dissolved in a melt of fluorine containing minerals and electrolysed to form aluminium. Hence, electrolytic cell 4 functions as an electrolysis cell. Powdered aluminium oxide is fed to electrolytic cell 4 from a hopper 12 integrated in a superstructure 12a of electrolytic cell 4. Powdered aluminium oxide is fed to the bath 8 by means of feeders of which only one feeder 14 is illustrated in Fig. 1.

The electrolysis process occurring in electrolytic cell 4 generates large amounts of heat, dust particles and an effluent gas comprising, among other components, hydrogen fluoride, sulphur dioxide and carbon dioxide. A hood 16 is arranged over at least a portion of the bath 8 and defines interior area 16a. A suction duct 18 is fluidly connected to interior area 16a via hood 16. Similar suction ducts 18 from each parallel electrolytic cell 4 are fluidly connected to one collecting duct 20.

A gas flow generating device, typically in the form of a fan 22, is fluidly connected to collecting duct 20 via a fluidly connected suction duct 24. A primary heat exchanger 26 is fluidly connected to suction duct 24 for cooling effluent gas passing therethrough and for heat energy recovery. The fan 22 draws, via suction duct 24, collecting duct 20 and suction duct 18, effluent gas from interior area 16a of hood 16. Accordingly, effluent gas is drawn through the primary heat exchanger 26 and gas cleaning unit 28 of gas cleaning system 5, as depicted by an arrow inside duct 24 in Fig. 1. Before entering gas cleaning unit 28, effluent gas is cooled in heat exchanger 26. As illustrated in Fig. 1, fan 22 is preferably located downstream with respect to the flow of process gas, of gas cleaning unit 28 to generate a negative pressure in gas cleaning unit 28. However, as an alternative, fan 22 could be located upstream with respect to the flow of process gas of gas cleaning unit 28 to generate a positive pressure therein. Fan 22 creates via fluidly connected suction duct 24, collecting duct 20 and suction duct 18, a suction in interior area 16a of hood 16. Some ambient air will, as a result of such suction, be drawn into interior area 16a mainly via openings formed between side wall doors 15, some of which have been removed in the illustration of Fig. 1 to illustrate the anode electrodes 6 more clearly. Some ambient air will also enter interior area 16a via other openings, such as openings between covers (not shown) and panels (not shown) making up the hood 16 and the superstructure 12a of electrolytic cell 4. Ambient air drawn into interior area 16a by means of fan 22 will cool the internal structures of electrolytic cell 4, including, for example, anode electrodes 6, and will also entrain gases and dust particles generated in the electrolysis of the aluminium oxide. The effluent gas drawn from interior area 16a will, hence, comprise an entrained mixture of ambient air, dust particles, and gases, such as hydrogen fluoride, sulphur dioxide and carbon dioxide, generated during the electrolytic process.

Gas cleaning system 5 comprises gas cleaning unit 28 in which effluent gas is cleaned before release to the atmosphere. Gas cleaning unit 28 comprises a contact reactor 30 in which effluent gas is mixed with an absorbent, typically fresh aluminium oxide that is later utilized in the aluminium production process. Aluminium oxide reacts with some components of the effluent gas, in particular hydrogen fluoride, HF, and sulphur dioxide, SO₂. The particulate reaction products formed by the reaction of aluminium oxide with hydrogen fluoride and sulphur dioxide are then separated from the effluent gas by means of a dust removal device, such as an electrostatic precipitator or a fabric filter 32 fluidly connected to contact reactor 30 and forming part of gas cleaning unit 28. In addition to removing hydrogen fluoride and sulphur dioxide from the effluent gas, gas cleaning unit 28 via fabric filter 32 also separates at least a portion of the dust particles entrained in the effluent gas from interior area 16a. An example of such a suitable gas cleaning unit 28 is described in more detail in US 4,501,599. Cleaned effluent gas flows from gas cleaning unit 28 by means of fan 22 for release to the atmosphere via fluidly connected stack 34. Optionally, gas cleaning system 5 could be equipped with a device for removing carbon dioxide from the cleaned effluent gas, prior to release to the atmosphere.

Gas cleaning system 5 may comprise one or several parallel gas cleaning units 28. A fan 22 is preferably located downstream with regard to the flow of effluent gas, of each gas cleaning unit 28 to generate a negative pressure in gas cleaning unit 28. Hence, an aluminium production plant may comprise several fans 22 in order to actively draw effluent gas through each gas cleaning unit 28.

Primary heat exchanger 26, which in this example is a gas-liquid heat exchanger, is arranged in duct 24 upstream with regard to the flow of effluent gas, of gas cleaning unit 28. However, primary heat exchanger 26 could also, as an alternative, be located downstream with regard to the flow of effluent gas, of gas cleaning unit 28. A cooling medium, for example in the form of water, oil, a glycol-water mixture, an organic substance, ammonia, etc. is supplied to heat exchanger 26 via fluidly connected supply pipe 36. Heat exchanger 26 is fluidly connected to a secondary heat exchanger 38 that forms part of a power generation system 40 arranged to generate mechanical work used to drive fan 22, as described further hereinafter. In primary heat exchanger 26, cooling medium is heated by hot effluent gas passing through primary heat exchanger 26. Heated cooling medium circulates from primary heat exchanger 26 to fluidly connected secondary heat exchanger 38 via fluidly connected supply pipe 42. Heated cooling medium is then cooled by circulation through secondary heat exchanger 38 before being pumped back by means of a pump 44 to primary heat exchanger 26, via pipe 36. Hence, the cooling medium is circulated in a first circuit comprising primary heat exchanger 26, secondary heat exchanger 38, and fluidly connected pipes 36 and 42 by means of a pump 44. The cooling medium could, for example, be circulated through primary heat exchanger 26 in a direction counter-current, co-current, or cross-current with respect to the flow of effluent gas passing therethrough. Often it is preferable to circulate the cooling medium through heat exchanger 26 counter-current to the flow of effluent gas to obtain the maximum transfer of heat energy from the effluent gas to the cooling medium prior to the effluent gas and cooling medium exiting the heat exchanger 26.

Typically, cooling medium has a temperature of 40° to 100°C upon entering primary heat exchanger 26 via pipe 36. The effluent gas drawn from interior area 16a via suction duct 18 may typically have a temperature of 90° to 200°C, but the temperature may also be as high as 300°C, or even higher, such as up to 400°C. In primary heat exchanger 26, the effluent gas is cooled to a temperature of, typically, 70° to 130°C. As effluent gas is cooled, the temperature of the cooling medium increases to, typically, 60° to 110°C, or even higher. Hence, heated cooling medium having a temperature of 60° to 110°C, or even up to 270°C for example, flows from heat exchanger 26 via pipe 42.

Cooling medium flowing from primary heat exchanger 26 via pipe 42 circulates to secondary heat exchanger 38 where heat energy is transferred from the heated cooling medium to a working fluid of the power generation system 40.

Power generation system 40 comprises secondary heat exchanger 38, a heated fluid-propelled drive unit in the form of a turbine 46, and a condenser 52, which are each fluidly connected to the other by means of fluidly connected pipes 48, 54 and 56, respectively. In the embodiment of Fig. 1 the heated fluid is vapour generated by vaporisation of a liquid in the heat exchanger 38, and the turbine 46 is, hence, a vapour-driven turbine 46. Power generation system 40 further comprises a pump 58 operative for circulating a working fluid of power generation system 40 in a second circuit comprising secondary heat exchanger 38, turbine 46, condenser 52 and pipes 48, 54, 56.

In this embodiment, the power generation system 40 is based on an organic Rankine cycle. In an organic Rankine cycle, an organic fluid with a liquid-vapour phase change, or boiling point, occurring at a lower temperature than that of the liquid-vapour phase change of water, is used as a working medium. Such a fluid is preferred in this case since such results in improved heat energy recovery from low temperature sources as compared to a traditional Rankine cycle that uses water as the working medium. As alternative to an organic fluid, it is also possible to utilize, for example, ammonia, or an ammonia-water mixture, as a working medium in a Rankine cycle, to improve the efficiency over a Rankine cycle using only water.

Preferably, the working fluid of power generation system 40 used in accordance with a Rankine cycle has a boiling point lower than 60°C. Examples of suitable fluids for such use as a working medium in power generation system 40 include ammonia, propane and carbon dioxide.

The relatively low temperature heat of the effluent gas from interior 16a of hood 16, is by means of the above described Rankine cycle, such as an organic Rankine cycle, converted into useful work for direct use or indirect use by conversion into electricity. The working principle of the organic Rankine cycle is the same as that of the Rankine cycle, i.e. a working fluid is pumped to a boiler, in this case the secondary heat exchanger 38, where it is evaporated to generate vapour. The evaporated working fluid is then passed through a turbine, in this case the turbine 46, and is finally re-condensed to form a liquid, in the condenser 52.

Referring more specifically to Fig. 1, the working fluid is evaporated in the secondary heat exchanger 38 using heat transferred from the heated cooling medium of the first circuit, i.e. heat from the effluent gas. The evaporated working fluid, i.e. vapour, having a first pressure flows via fluidly connected pipe 48 from secondary heat exchanger 38 to turbine 46. The vapour enters turbine 46 under a reduction of vapour pressure to a second pressure. Vapour, having a second pressure, lower than that of the first pressure, with a corresponding increase in vapour volume, serves to rotate turbine 46. Vapour under the second pressure then flows via fluidly connected pipe 54 to condenser 52. In condenser 52 the working fluid is cooled by means of ambient air, or another suitable cooling medium, such as sea water, causing the working fluid to condense and form a liquid, which is again, by means of pump 58 and via fluidly connected pipe 56, circulated to secondary heat exchanger 38.

The rotational movement of turbine 46 is the realized mechanical work that powers fan 22 via interconnected turbine shaft 50. Fan 22 is thus powered to generate a flow of effluent gas for cleaning from interior area 16a of hood 16 to primary heat exchanger 26, gas cleaning unit 28 and stack 34 via ducts 18, 20 and 24, respectively. Hence, heat energy from the effluent gas is utilized to generate vapour useful to power fan 22 by means of a vapour-propelled drive unit comprising turbine 46 and turbine shaft 50.

The turbine shaft 50 may be connected to fan 22 via a gear box (not shown) to reduce the number of rotations per minute (rpm) required by turbine shaft 50 to generate suitable rpm for impeller 22a of fan 22. The speed of the turbine shaft 50 may for example be around 20,000 rpm. Impeller 22a typically operates within an interval of 500 to 3000 rpm.

In addition to one or more fans 22 powered using heat energy recovered from effluent gas in accordance with the principles described hereinbefore with reference to Fig. 1, a gas cleaning system may comprise one or more complementary fans powered by a conventional external power source, such as electric power from a national electric grid. As an alternative, such complementary fans may be gas or diesel powered. Such complementary fans may be held in a "stand-by" mode during normal operation of the plant and may thus be operated only in the case of start-up or re-start of plant operation. An aluminium production plant may thus comprise one or more complementary fans in order to provide a gas cleaning system offering high reliability and to provide for sufficient ventilation of interior area 16a of hood 16 during start-up/re-start of the aluminium production plant.

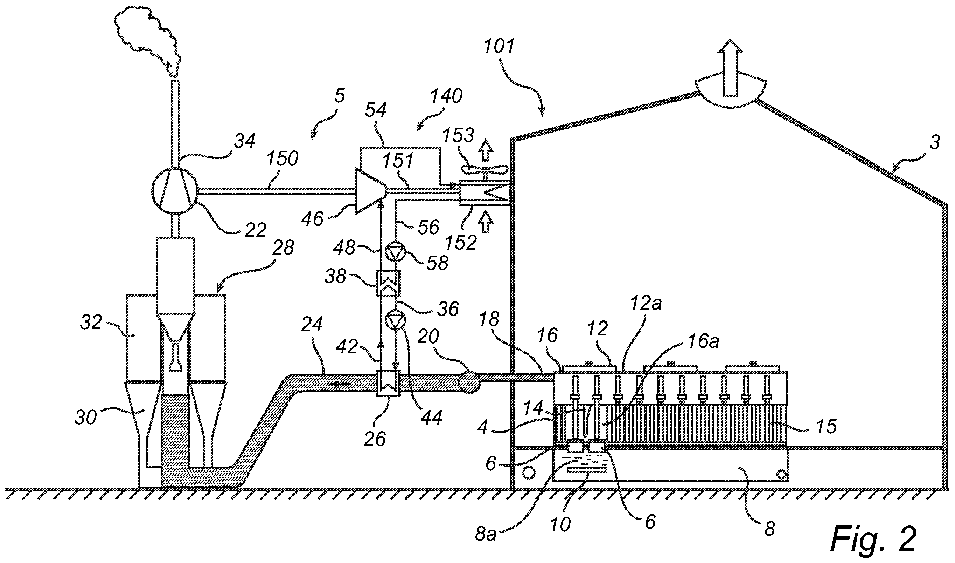

Fig. 2 is a schematic side view of aluminium production plant 101 according to a second embodiment. Many of the features of aluminium production plant 101 are similar to the features of aluminium production plant 1, and those similar features of Fig. 2 have been given the same reference numerals as those of Fig. 1. The power generation system 140 differs from the power generation system 40 illustrated in Fig. 1 in that turbine 46 has a second turbine shaft 151, connected to a fan 153 of condenser 152. Fan 153 is operative for generating a flow of ambient air through condenser 152, as indicated by arrows in Fig. 2. Ambient air flows through condenser 152 to cool the working medium in accordance with similar principles described hereinbefore with reference to condenser 52 of Fig. 1. Hence, heat energy recovered from the effluent gas is used to power condenser 152. In comparison to power generation system 40 described in Fig. 1, power generation system 140 provides the dual function of powering fan 22 as described hereinbefore by means of a first turbine shaft 150, and powering fan 153 of condenser 152 by means of second turbine shaft 151.

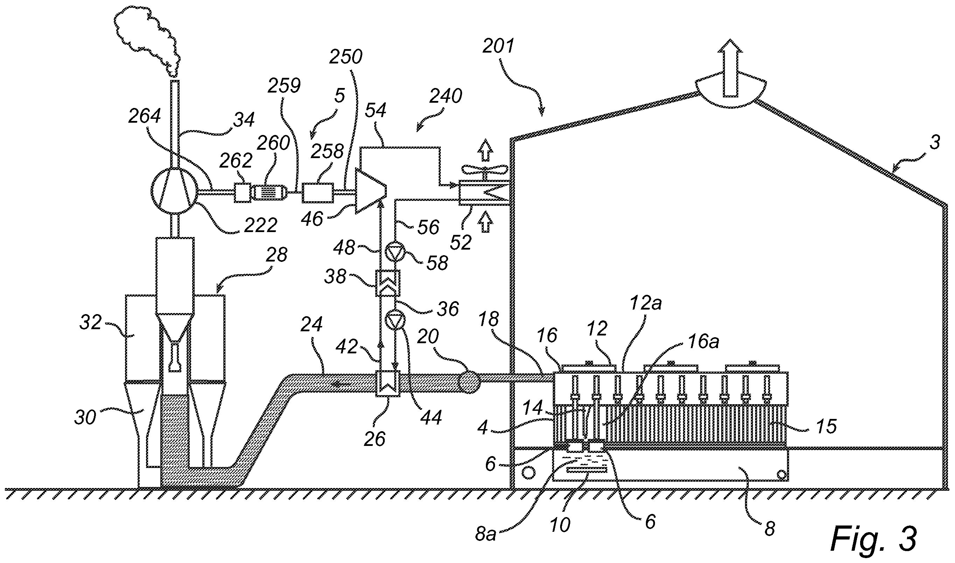

Fig. 3 is a schematic side view of an aluminium production plant 201 according to a third embodiment. Many of the features of aluminium production plant 201 are similar to the features of aluminium production plant 1, and those similar features of Fig. 3 have been given the same reference numerals as those of Fig. 1. In the embodiment of Fig. 3, power generation system 240 differs from power generation system 40 illustrated in Fig. 1 in that a turbine shaft 250 connected to turbine 46 is connected to an electrical generator 258 to convert mechanical energy to electrical energy, rather than being mechanically connected to fan 222 as described with regard to fan 22 of Fig. 1. Electric energy generated by electrical generator 258 flows via cable 259 to an electric motor 260 that mechanically drives fan 222 via a gear box 262 and a shaft 264. Hence, the heat energy recovered from the hot effluent gas is in this embodiment converted to electrical energy utilized to operate the fan 222 via an electric motor 260.

Alternatively, the electric energy generated by generator 258 may flow to a power grid connected to fan 222 motor.

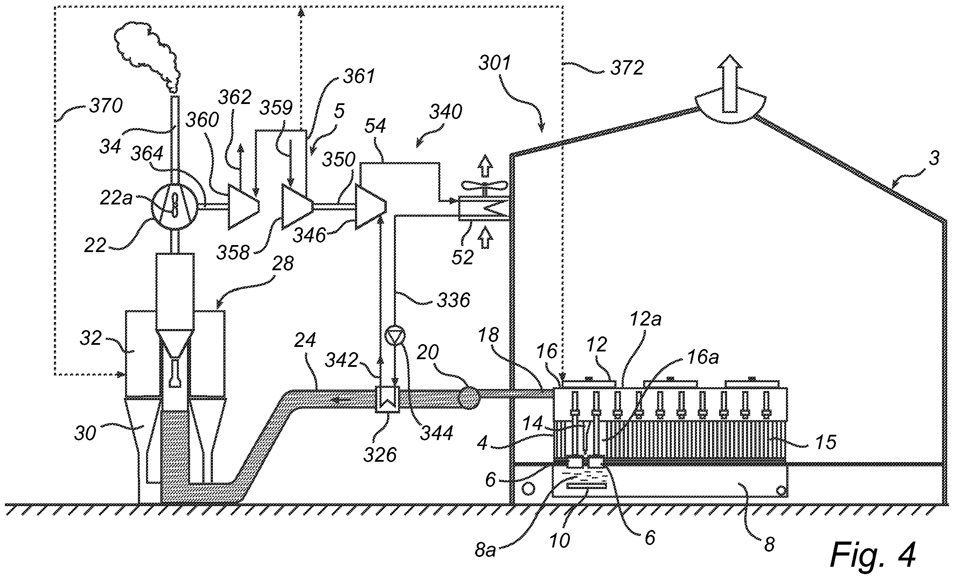

Fig. 4 is a schematic side view of aluminium production plant 301 according to a fourth embodiment. Many of the features of aluminium production plant 301 are similar to the features of aluminium production plant 1, and those similar features of Fig. 4 have been given the same reference numerals as those of Fig. 1. The power generation system 340 differs from the power generation system 40 illustrated in Fig. 1 in that it has a primary heat exchanger 326, but lacks secondary heat exchanger. A working medium, for example in the form of water, oil, a glycol-water mixture, an organic substance, ammonia, etc. is supplied to heat exchanger 326 via fluidly connected supply pipe 336. In primary heat exchanger 326, working medium is heated and vaporized by hot effluent gas passing through primary heat exchanger 326. The evaporated working medium, i.e. vapour, having a first pressure flows via fluidly connected pipe 342 from heat exchanger 326 to a vapour-propelled drive unit in the form of a screw expander 346. The screw expander 346 could, for example, be a double screw expander of the type illustrated in Figs. 6-9 of US 7,637,108 B1. As alternative to a screw expander 346, the vapour-propelled drive unit of the power generation system 340 could be a vapour driven turbine. Returning to Fig. 4 of the present application, the vapour enters screw expander 346 under a reduction of vapour pressure to a second pressure. Vapour, having a second pressure, lower than that of the first pressure, with a corresponding increase in vapour volume, serves to rotate screw expander 346. Vapour under the second pressure then flows via fluidly connected pipe 54 to condenser 52. In condenser 52 the working medium is cooled by means of ambient air, or another suitable working medium , such as sea water, causing the working medium to condense and form a liquid, which is again, by means of pump 344 and via fluidly connected pipe 336, circulated back to heat exchanger 326.

The screw expander 346 is connected to a screw expander shaft 350. The rotational movement of screw expander 346 is the realized mechanical work that powers an air compressor 358 via interconnected shaft 350. The air compressor 358 compresses air of ambient pressure forwarded to compressor 358 via fluidly connected pipe 359 and generates a flow of compressed air, typically having a pressure of 2-15 bar over atmospheric pressure. The flow of compressed air hence generated is a utility that may be used in various places in the aluminium production plant 301. Hence, for example, at least a portion of the flow of compressed air may be forwarded from compressor 358 to a drive turbine 360 via fluidly connected pipe 361. The flow of compressed air expands in drive turbine 360 and causes drive turbine 360 to rotate. After expansion in drive turbine 360, the air is admitted to ambient via a pipe 362. The drive turbine 360 is connected to a drive turbine shaft 364. The rotational movement of drive turbine 360 is the realized mechanical work that powers fan 22 via interconnected shaft 364. Fan 22 is thus powered to generate a flow of effluent gas for cleaning from interior area 16a of hood 16 to primary heat exchanger 326, gas cleaning unit 28 and stack 34 via ducts 18, 20 and 24, respectively. Hence, heat energy from the effluent gas is utilized to generate vapour useful to power fan 22 by means of a vapour-propelled drive unit comprising turbine 346, compressor 358, and drive turbine 360.

Optionally, a pipe 370 may be fluidly connected to pipe 361 for forwarding a portion of the flow of compressed air generated in the compressor 358 to other consumers of compressed air within aluminium production plant 301. An example of a consumer of compressed air is the dust removal device, which may be a fabric filter 32. In a fabric filter compressed air may be utilized for removing collected dust from fabric filter bags, as is well known from, for example, US 4,336,035. As a further option, a pipe 372 may be fluidly connected to pipe 361 for forwarding a portion of the flow of compressed air generated in the compressor 358 to the aluminium production electrolytic cells 4, and to other parts of the aluminium production plant 301 for use as, for example, a sealing air flow, a pneumatic device control air flow, etc.

It will be appreciated that numerous variants of the embodiments described above are possible within the scope of the appended claims.

Hereinbefore it has been described, with reference to Figs. 1-4, a heat exchanger 26, 326 arranged in duct 24 for cooling effluent gas prior to the effluent gas entering gas cleaning unit 28. It will be appreciated that heat exchanger 26, 326 may, as alternative, be arranged in other locations throughout the gas cleaning system 5. For example, heat exchanger 26, 326 may be arranged in suction duct 18 or in collecting duct 20. Furthermore, heat exchanger 26, 326 may be arranged downstream with respect to the flow of effluent gas, of gas cleaning unit 28, for example in stack 34. Such a downstream location may still be useful to recover energy to power fan 22, although the benefits obtained by cleaning a cooled effluent gas in gas cleaning unit 28 would be reduced or even lost.

Hereinbefore, it has described that the metallurgical plant is an aluminium production plant 1. It will be appreciated that the metallurgical plant may also be another type of plant. For example, the metallurgical plant may also be an electric arc furnace (EAF) in which scrap metal is melted in the production of steel. Effluent gas, which may have a gas temperature of about 100-1500°C, is withdrawn from a hood of the EAF via a fluidly connected exhaust duct and is cooled prior to being cleaned in a gas cleaning unit. A heat exchanger 26, 326 may be arranged in the exhaust duct for generating a heated fluid which may be utilized in a turbine or a screw expander for driving, for example, a gas flow generating device 22 or a compressor 358.

In the embodiments discussed hereinbefore the power generation system 40, 140, 240, 340 is based on an organic Rankine cycle, or a Rankine cycle utilizing, for example, ammonia or a mixture of ammonia and water as working medium. It is realized that the power generation system instead may be based on a conventional steam Rankine cycle, Stirling cycle or other processes that are able to convert heat energy from heat exchanger 26, 326 to mechanical work or electrical energy to power a fan or the like. Still further examples of thermodynamic principles and methods for the transfer of low temperature heat of the effluent gas into mechanical work include the Kalina-cycle, the trans-critical Rankine cycle, and the Brayton cycle. The Brayton cycle involves heating of a compressed gas, such as air, such heating being effected in, for example, the heat exchanger 26, 326, followed by expansion of the heated and compressed air in, for example, the turbine 46 or the screw expander 346.

Hereinbefore, it has been described that the heat obtained upon cooling of the effluent gas is utilized for generating, directly or indirectly, a heated fluid in the form of vapour, which is utilized for driving a vapour-propelled drive unit, such as a turbine 46 or a screw expander 346. It is also possible, as an alternative, to utilize the heat obtained upon cooling of the effluent gas for heating a working fluid which is already from the start a gas, such as air, thus generating a heated fluid in the form of a heated gas, namely air. The expansion of the heated air then drives, for example, a turbine or a screw expander. An example of the latter thermodynamic principle is the above-mentioned Brayton cycle in which the working medium is a gas, such as air, which is never condensed. In accordance with a further alternative, the heat obtained upon cooling of the effluent gas may be utilized for heating a working fluid which is in liquid state all through the cycle, thus generating a heated fluid in the form of a heated liquid. An example of such a liquid is water. By utilizing the effluent gas for heating water in a closed off tank, an expansion of the water and an increased pressure is obtained. A water turbine could be connected to such a tank, a flow of water out of the tank, caused by the heat induced expansion of the water, driving the water turbine. Suitably, two or more parallel tanks are arranged for achieving a rather constant flow of heated water, from first and second tanks in an alternating manner. This method of utilizing heat for generating a flow of heated water is sometimes referred to as the thermal pump principle. The thermal pump would, hence, be connected to a heated liquid-propelled turbine or screw expander powering the fan 22 and/or the compressor 358, as the case may be. As described, the heat obtained in the cooling of the effluent gas could be utilized for heating a medium to generate various types of heated fluids, including vapour, heated gas, and heated liquid, such heated fluid being utilized for driving a heated fluid-propelled drive unit, such as a turbine 46 or a screw expander 346.

Hereinbefore it has been described that a first and a second circuit is used with regard to a primary and a secondary heat exchanger 26, 38, respectively. It will be appreciated that the gas cleaning system may, as alternative, be provided with only one heat exchanger, in which the heat energy of the effluent gas is directly recovered in a working medium that evaporates and is supplied to a turbine or a screw expander, as described with reference to Fig. 4. Such a working medium could be water, ammonia, carbon dioxide, or an organic working fluid, such as propane, and organic fluids typically used in heat pumps and refrigeration systems. For safety reasons, however, it is often preferred to have a first and a second circuit as described hereinbefore, with the first circuit operational without evaporation. Hence, in the embodiment illustrated with reference to Fig. 4, it would also be possible, as an alternative embodiment, to utilize a primary and a secondary heat exchanger 26, 38, arranged in first and second circuits, in accordance with the principles described with reference to Fig. 1. In accordance with a further alternative embodiment, it would also be possible to utilize a third, and even a fourth circuit, if needed. Thus, the heated fluid powering the heated fluid-propelled drive unit, such as a turbine 46 or a screw expander 346, could be generated directly in heat exchanger 326, as illustrated in Fig. 4, or indirectly, in heat exchanger 38, as illustrated in Figs. 1-3.

In the embodiments illustrated in Figs. 1-3, the power generation system comprises a vapour-propelled drive unit in the form of a turbine expander. Alternatively, the power generation system may instead comprise a screw expander, for example a double screw expander of the type illustrated in Figs. 6-9 of US 7,637,108 B1.

In the embodiment of Fig. 4, it has been described that the fan 22 is powered by at least a portion of the flow of compressed air generated in compressor 358 which is driven by turbine 346. In accordance with an alternative embodiment, the fan 22 may be powered by other means, for example electricity, or a mechanical shaft from a turbine, in a similar manner as described hereinbefore with reference to any one of figs Fig. 1-3. In such a case, the entire flow of compressed air generated in the compressor 358 may be used as utility in various other parts of the aluminium production plant 301.

A method of using the gas cleaning system 5 illustrated in Fig. 1 comprises drawing effluent gas from interior 16a of hood 16 of electrolytic cell 4 and further through gas cleaning unit 28, via fluidly connected ducts 24, 20 and 18, by means of the fan 22. When passing through heat exchanger 26 fluidly connected to duct 24 heat energy is transferred from the effluent gas to the cooling medium circulated in primary heat exchanger 26 by means of pump 44 and fluidly connected pipes 36, 42. The heat energy thereby absorbed by the cooling medium is forwarded to secondary heat exchanger 38. In secondary heat exchanger 38 heat energy is transferred from the cooling medium to a working fluid, causing the working fluid to be vaporized, thus forming a heated fluid. The vapour is forwarded from secondary heat exchanger 38 to turbine 46 via fluidly connected pipe 48. The vapour expands in turbine 46, making turbine 46 rotate. The expansion of the vapour is driven by condensation of the vapour in the condenser 52 being fluidly connected to the turbine 46 via the pipe 54. A flow of water, ambient air or other suitable medium is forwarded through condenser 52 to cause a cooling and condensation of the vapour. The vapour thus condensed in the condenser 52 is returned to the secondary heat exchanger 38 via fluidly connected pipe 56 and pump 58 to receive more heat energy. The rotation of the turbine 46 is transferred, via interconnected turbine shaft 50, to fan 22, which is made to rotate. As an effect of such rotation of the fan 22, a flow of effluent gas is maintained through gas cleaning unit 28, and also through primary heat exchanger 26, thereby ensuring a continuous supply of heat energy to turbine 46, via heat exchangers 26 and 38 and the cooling and working mediums circulated therethrough.

A method of using the gas cleaning system illustrated in Fig. 2 comprises in principal the same stages as the method described hereinbefore with reference to Fig. 1, with the additional feature of the rotation of the turbine 46 being transferred, via interconnected second turbine shaft 151, to a fan 153 of the condenser 152. As an effect of such transfer of rotation from the turbine 46 to the fan 153, the fan 153 is made to rotate, causing ambient air to flow through condenser 152. As an effect of such air-flow efficient condensation of vapour being forwarded to condenser 152 from turbine 46 via fluidly connected pipe 54 is achieved.

A method of using the gas cleaning system illustrated in Fig. 3 comprises in principal the same stages as the method described hereinbefore with reference to Fig. 1, with the additional feature of the rotation of the turbine 46 being transferred, via interconnected turbine shaft 250, to electrical generator 258, which is provided with a rotation. As an effect of such rotation the generator 258 generates electricity. The thus generated electricity is transferred, via interconnected cable 259, to electric motor 260, that mechanically drives, via interconnected gear box 262 and shaft 264, the fan 22, to generate the flow of effluent gas through gas cleaning unit 28, and also through primary heat exchanger 26, thereby ensuring a continuous supply of heat energy to turbine 46, via heat exchangers 26 and 38 and the cooling and working mediums circulated therethrough.

A method of using the gas cleaning system illustrated in Fig. 4 comprises in principal the same stages as the method described hereinbefore with reference to Fig. 1, with the additional feature of the rotation of the screw expander 346 being transferred, via interconnected turbine shaft 350, to compressor 358, which is provided with a rotation. As an effect of such rotation the compressor 358 generates a flow of compressed air. The thus generated flow of compressed air is utilized as a utility in the aluminium production plant 301. In accordance with one embodiment, at least a portion of the flow of compressed air may be transferred, via fluidly connected pipe 361, to drive turbine 360, that mechanically drives, via interconnected shaft 364, the fan 22, to generate the flow of effluent gas through gas cleaning unit 28, and also through primary heat exchanger 326, thereby ensuring a continuous supply of heat energy to turbine 346, via heat exchanger 326 and the working medium circulating therethrough. In accordance with one embodiment, at least a portion of the flow of compressed air may be transferred, via fluidly connected pipes 370, 372, to other parts of the aluminium production plant 301 for being used as a utility in, for example, the gas cleaning unit 28 and/or the aluminium production electrolytic cell 4.

To summarize, a metallurgical plant gas cleaning system 5 comprises at least one gas cleaning unit 28, and a gas flow generating device 22 for generating a flow of effluent gas to be cleaned through the gas cleaning unit 28. The gas cleaning system 5 further comprises a heat exchanger 26 for cooling said effluent gas and for generating a heated fluid, and a heated fluid-propelled drive unit 46 for receiving the heated fluid generated by said heat exchanger 26 to power said gas flow generating device 22.

While the present invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A metallurgical plant gas cleaning system comprising at least one gas cleaning unit (28), and a gas flow generating device (22) for generating a flow of effluent gas to be cleaned through the gas cleaning unit (28),
the gas cleaning system comprising
a heat exchanger (26; 326) for cooling said effluent gas and for generating a heated cooling medium,
**characterized by** further comprising
a secondary heat exchanger (38) for generating a heated fluid by cooling the heated medium,
a heated fluid-propelled drive unit (46; 346, 350) for receiving the heated fluid generated by means of said secondary heat exchanger (38) and for
powering said gas flow generating device (22), and/or for powering a compressor (358) generating a flow of compressed air for use as a utility in the metallurgical plant (301).

2. The gas cleaning system according to claim 1, wherein said heat exchanger (26; 326) for cooling said effluent gas is arranged upstream of said at least one gas cleaning unit (28).

3. The gas cleaning system according to any one of the preceding claims, wherein said heated fluid-propelled drive unit comprises a rotary engine (46; 346) that extracts energy from the heated fluid flow to power mechanical work.

4. The gas cleaning system according to any one of the preceding claims, wherein said heated fluid-propelled drive unit comprises a rotatable shaft (50) connected to a heated fluid-receiving turbine (46).

5. The gas cleaning system according to any one of the preceding claims, wherein said heated fluid-propelled drive unit comprises a rotatable shaft (350) to which a screw expander (346) for receiving said heated fluid is connected.

6. The gas cleaning system according to any one of the preceding claims, wherein said metallurgical plant is an aluminium production plant (1; 101; 201; 301).

7. The gas cleaning system according to claim 1, wherein at least a portion of the flow of compressed air generated by the compressor (358) is utilized as a utility in the gas cleaning unit (28).

8. The gas cleaning system according to any one of claims 1 and 7, wherein at least a portion of the flow of compressed air generated by the compressor (358) is utilized for powering the gas flow generating device (22).

9. A method of cleaning effluent gas in a metallurgical plant, comprising:
cooling the effluent gas in a heat exchanger (26; 326) while generating a heated cooling medium utilizing heat extracted from the effluent gas
in said heat exchanger (26; 326),
**characterised by**
passing the heated cooling medium through a secondary heat exchanger (38) to generate heated fluid,
driving a gas flow device (22) of a gas cleaning system (5) by means of the heated fiuid to create a flow of effluent gas through at least one gas cleaning unit (28) of the gas cleaning system (5) to clean the effluent gas, and/or drive a compressor (358) to create a flow of compressed air for use as a utility in the metallurgical plant (301).

10. The method of claim 9, wherein the temperature of the effluent gas entering the heat exchanger (26; 326) is below 400°C.

## Patentansprüche

1. Ein Gasreinigungssystem eines Hüttenwerks, umfassend mindestens eine Gasreinigungseinheit (28) und eine Gasstrom erzeugende Vorrichtung (22) zum Erzeugen eines Stroms von ausströmendem Gas, welches durch die Gasreinigungseinheit (28) zu reinigen ist, wobei das Gasreinigungssystem einen Wärmetauscher (26; 326) zum Kühlen des ausströmenden Gases und zum Erzeugen eines erhitzten Kühlmediums umfasst,
**gekennzeichnet durch** ferner umfassend
einen sekundären Wärmetauscher (38) zum Erzeugen eines erhitzten Fluids durch Kühlen des erhitzten Mediums, eine erhitzte, fluidgetriebene Antriebseinheit (46; 346, 350) zum Aufnehmen des mittels des sekundären Wärmetauschers (38) erzeugten erhitzten Fluids und
zum Antreiben der Gasstrom erzeugenden Vorrichtung (22) und/oder zum Antreiben eines Kompressors (358), welcher einen Strom von verdichteter Luft zur Verwendung als eine Versorgung in dem Hüttenwerk (301) erzeugt.

2. Das Gasreinigungssystem nach Anspruch 1, wobei der Wärmetauscher (26; 326) zur Kühlung des ausströmenden Gases stromaufwärts von der mindestens einen Gasreinigungseinheit (28) angeordnet ist.

3. Das Gasreinigungssystem nach einem der vorhergehenden Ansprüche, wobei die erhitzte, fluidgetriebene Antriebseinheit einen Umlaufmotor (46; 346) umfasst, welcher dem erhitzten Fluidstrom Energie entzieht, um mechanische Arbeit anzutreiben.

4. Das Gasreinigungssystem nach einem der vorhergehenden Ansprüche, wobei die erhitzte, fluidgetriebene Antriebseinheit eine Drehwelle (50) umfasst, welche mit einer erhitzten, fluidaufnehmenden Turbine (46) verbunden ist.

5. Das Gasreinigungssystem nach einem der vorhergehenden Ansprüche, wobei die erhitzte, fluidgetriebene Antriebseinheit eine Drehwelle (350) umfasst, mit welcher ein Schraubenexpander (346) zur Aufnahme des erhitzten Fluids verbunden ist.

6. Das Gasreinigungssystem nach einem der vorhergehenden Ansprüche, wobei das Hüttenwerk ein Aluminium erzeugendes Werk (1; 101; 201; 301) ist.

7. Das Gasreinigungssystem nach Anspruch 1, wobei mindestens ein Teil des Stroms von durch den Kompressor (358) erzeugter verdichteter Luft als eine Versorgung in der Gasreinigungseinheit (28) verwendet wird.

8. Das Gasreinigungssystem nach einem der Ansprüche 1 und 7, wobei mindestens ein Teil des Stroms von durch den Kompressor (358) erzeugter verdichteter Luft zum Antreiben der Gasstrom erzeugenden Vorrichtung (22) verwendet wird.

9. Ein Verfahren zum Reinigen von ausströmendem Gas bei einem Hüttenwerk, umfassend:
Kühlen des ausströmenden Gases in einem Wärmetauscher (26; 326), während ein erhitztes Kühlmedium unter Verwendung von Wärme, welche dem ausströmenden Gas in dem Wärmetauscher (26; 326) entzogen wurde, erzeugt wird,
**gekennzeichnet durch**
Führen des erhitzten Kühlmediums durch einen sekundären Wärmetauscher (38), um erhitztes Fluid zu erzeugen,
Antreiben einer Gasstromvorrichtung (22) eines Gasreinigungssystems (5) mittels des erhitzten Fluids, um einen Stroms von ausströmendem Gas durch mindestens eine Gasreinigungseinheit (28) des Gasreinigungssystems (5) zu erzeugen, um das ausströmende Gas zu reinigen, und/oder einen Kompressor (358) anzutreiben, um einem Strom von verdichteter Luft zur Verwendung als eine Versorgung in dem Hüttenwerk (301) zu erzeugen.

10. Das Verfahren nach Anspruch 9, wobei die Temperatur des in den Wärmetauscher (26; 326) eintretenden ausströmenden Gases unter 400 °C liegt.

## Revendications

1. Système d'épuration des gaz d'une installation métallurgique, le système comprenant au moins une unité (28) d'épuration des gaz et un dispositif (22) de production d'un écoulement de gaz qui produit dans l'unité (28) d'épuration des gaz un écoulement de gaz d'effluent à épurer,
le système d'épuration de gaz comprenant un échangeur de chaleur (26; 326) qui refroidit ledit gaz d'effluent et qui produit un milieu de refroidissement chauffé,
**caractérisé en ce qu'**il comprend en outre
un échangeur de chaleur secondaire (38) qui produit un fluide chauffé en refroidissant le milieu chauffé,
une unité (46; 346, 350) d'entraînement entraînée par le fluide chauffé et qui reçoit le fluide chauffé produit au moyen dudit échangeur de chaleur secondaire (38) et qui alimente en énergie ledit dispositif (22) de production d'un écoulement de gaz et/ou qui alimente en énergie un compresseur (358) qui produit un écoulement d'air comprimé destiné à être utilisé comme consommable dans l'installation métallurgique (301).

2. Système d'épuration de gaz selon la revendication 1, dans lequel ledit échangeur de chaleur (26; 326) qui refroidit ledit gaz d'effluent est agencé en amont de ladite ou desdites unités (28) d'épuration des gaz.

3. Système d'épuration de gaz selon l'une quelconque des revendications précédentes, dans lequel ladite unité d'entraînement entraînée par le fluide chauffé comprend un moteur rotatif (46; 346) qui extrait de l'énergie de l'écoulement de fluide chauffé en vue d'alimenter en énergie un travail mécanique.

4. Système d'épuration de gaz selon l'une quelconque des revendications précédentes, dans lequel ladite unité d'entraînement entraînée par le fluide chauffé comprend un arbre rotatif (50) raccordé à une turbine (46) recevant le fluide chauffé.

5. Système d'épuration de gaz selon l'une quelconque des revendications précédentes, dans lequel ladite unité d'entraînement entraînée par le fluide chauffé comprend un arbre rotatif (350) auquel un détendeur à vis (346) recevant ledit fluide chauffé est raccordé.

6. Système d'épuration de gaz selon l'une quelconque des revendications précédentes, dans lequel ladite installation métallurgique est une installation (1; 101; 201; 301) de production d'aluminium.

7. Système d'épuration de gaz selon la revendication 1, dans lequel au moins une partie de l'écoulement d'air comprimé produit par le compresseur (358) est utilisée comme consommable dans l'unité (28) d'épuration des gaz.

8. Système d'épuration de gaz selon l'une quelconque des revendications 1 et 7, dans lequel au moins une partie de l'écoulement d'air comprimé produit par le compresseur (358) est utilisée pour alimenter en énergie le dispositif (22) de production d'un écoulement de gaz.

9. Procédé d'épuration des gaz d'effluent d'une installation métallurgique comprenant les étapes qui consistent à :
refroidir les gaz d'effluent dans un échangeur de chaleur (26; 326) tout en produisant un milieu de refroidissement chauffé en utilisant la chaleur extraite des gaz d'effluent dans ledit échangeur de chaleur (26; 326),
**caractérisé par** l'étape qui consiste à
faire passer le milieu de refroidissement chauffé dans un échangeur de chaleur secondaire (38) de manière à produire un fluide chauffé,
entraîner un dispositif (22) d'écoulement de gaz d'un système (5) d'épuration des gaz au moyen du fluide chauffé de manière à créer un écoulement de gaz d'effluent qui traverse au moins une unité (28) d'épuration des gaz du système (5) d'épuration des gaz de manière à épurer le gaz d'effluent et/ou entraîner un compresseur (358) qui crée un écoulement d'air comprimé destiné à être utilisé comme consommable dans l'installation métallurgique (301).

10. Procédé selon la revendication 9, dans lequel la température des gaz d'effluent qui pénètrent dans l'échangeur de chaleur (26; 326) est inférieure à 400°C.
